(19) Europäisches Patentamt

European Patent Office

Office européen des brevets

(11) **EP 0 963 032 A1**

(12) **EUROPÄISCHE PATENTANMELDUNG**

(43) Veröffentlichungstag:
08.12.1999 Patentblatt 1999/49

(51) Int. Cl.⁶: **H02M 7/219**, H02M 3/338, G05F 3/06

(21) Anmeldenummer: 99201610.5

(22) Anmeldetag: 21.05.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 30.05.1998 DE 19824409

(71) Anmelder:
• Philips Patentverwaltung GmbH
22335 Hamburg (DE)
Benannte Vertragsstaaten:
DE

• Koninklijke Philips Electronics N.V.
5621 BA Eindhoven (NL)
Benannte Vertragsstaaten:
FR GB

(72) Erfinder: **Lauter, Josef, Dr.**
Röntgenstrasse 24, 22335 Hamburg (DE)

(74) Vertreter:
**Gössmann, Klemens et al**
**Philips Patentverwaltung GmbH,**
**Röntgenstrasse 24**
**22335 Hamburg (DE)**

(54) **AC-DC-Wandler**

(57) Die Erfindung betrifft einen AC-DC-Wandler mit einem Resonanzkonverter. Um einen AC-DC-Wandler mit einem Resonanzkonverter zu schaffen, der mit möglichst wenig Bauelementen zuverlässig in einem großen Ausgangsleistungbereich eine konstante Versorgungsgleichspannung ($U_{out}$) liefert, wobei die Eingangsimpedanz des AC-DC-Wandlers einen möglichst geringen Blindwiderstand aufweisen soll, wird vorgeschlagen, sowohl eine kapazitive (C2) als auch eine induktive (n3) Kopplung des Resonanzkonverters (8) mit einem Punkt (5) zwischen dem Resonanzkonverter (8) und einer Gleichrichteranordnung (1), die zur Gleichrichtung einer dem AC-DC-Wandler zugeführten Wechselspannung ($U_{in}$) dient, vorzusehen.

FIG.1

EP 0 963 032 A1

**Beschreibung**

Die Erfindung bezieht sich auf einen AC-DC-Wandler mit einem Resonanzkonverter.

Derartige AC-DC-Wandler dienen zur Umwandlung einer Wechselspannung in eine Gleichspannung und werden beispielsweise in Fernsehgeräten oder Entladungslampen in Form von Schaltnetzteilen eingesetzt, um eine Netzspannung in eine Versorgungsgleichspannung umzuwandeln.

Ein AC-DC-Wandler, der ein öffentliches Wechselspannungsnetz belastet, unterliegt besonderen Anforderungen hinsichtlich des Stromes, der dem Wechselspannungsnetz entnommen werden darf. So darf üblicherweise der vom AC-DC-Wandler aufgenommene Strom nur einen begrenzten Oberwellenanteil aufweisen, d.h. der AC-DC-Wandler muß im wesentlichen als Wirkwiderstand wirken. Der Scheinwiderstandsanteil der Eingangsimpedanz des AC-DC-Wandlers darf damit bestimmte Werte nicht überschreiten. Derartige Anforderungen sind beispielsweise in der IEC 1000-3-2 näher spezifiziert.

Aus dem Buch von Udo Leonhard Thiel "Professionelle Schaltnetzteilapplikationen", Franzis-Verlag, 1996, Kapitel 3.9 ist es bekannt, Resonanzkonverter zur Erhöhung der Leistungsdichte von Schaltnetzteilen (Verhältnis der Ausgangsleistung zum Gerätevolumen) zu verwenden. Dem liegt der Gedanke zugrunde, in den Primärkreis eines Schaltnetzteils eines LC-Schwingkreis einzubeziehen, der bei Bedarf für ein bestimmtes Zeitintervall geladen und im selben Zeitintervall wieder entladen wird. Mit einem Resonanzkonverter realisierte Stromversorgungen haben eine geringere Baugröße, eine verbesserte Betriebssicherheit und reduzierte EMV-Emissionen.

Aus dem Aufsatz von Robert L. Steigerwald "A Comparison of Half-Bridge Resonant Converter Topologies", IEEE Transactions on Power Electronics, Vol. 3, No. 2, April 1988, Seiten 174 bis 182, sind verschiedenen Topologien für Resonanzkonverter mit Halbbrückenschaltung bekannt.

Der Erfindung liegt die Aufgabe zugrunde, einen AC-DC-Wandler mit einem Resonanzkonverter zu schaffen, der mit möglichst wenig Bauelementen zuverlässig in einem großen Ausgangsleistungbereich eine konstante Versorgungsgleichspannung liefen, wobei die Eingangsimpedanz des AC-DC-Wandlers einen möglichst geringen Blindwiderstand aufweisen soll.

Die Aufgabe wird durch einen AC-DC-Wandler mit

- einer ersten Gleichrichteranordnung zur Erzeugung einer gleichgerichteten Wechselspannung aus einer am Eingang des AC-DC-Wandlers anliegenden Wechselspannung,
- einer ersten Glättungskondensatoranordnung zur Glättung der gleichgerichteten Wechselspannung,

- einem Resonanzkreiselemente aufweisenden Resonanzkonverter zur Umsetzung der an der ersten Glättungskondensatoranordnung anliegenden Spannung in eine am Ausgang des AC-DC-Wandlers zur Verfügung stehende Ausgangsgleichspannung,
- einem zwischen der ersten Gleichrichteranordnung und der ersten Glättungskondensatoranordnung angeordneten induktivem Element, das magnetisch mit einem induktiven Resonanzkreiselement gekoppelt ist und
- einer kapazitiven Kopplung eines Punktes zwischen der ersten Gleichrichteranordnung und der ersten Glättungskondensatoranordnung mit einem Punkt innerhalb des Resonanzkonverters derart, daß während des Betriebs des AC-DC-Wandlers ein mit der Arbeitsfrequenz des Resonanzkonverters moduliertes Potential rückgekoppelt wird

gelöst.

Beim Wirksamwerden der magnetischen und damit induktiven Kopplung durch das induktive Element und der genannten kapazitiven Kopplung wird die Resonanzfrequenz des Resonanzkonverters nahezu konstant gehalten, da die Einflüsse der induktiven und kapazitiven Kopplung aufdie Resonanzfrequenz sich gegenseitig aufheben. Zur Arbeitspunktbestimmung verwendete Kennlinienfelder des Resonanzkonverters ändern sich nur unwesentlich. Ein derartiger AC-DC-Wandler hat den Vorteil, daß die Arbeitsfrequenz bei fester Ausgangsleistung nahezu konstant gehalten werden kann. Damit ist die erforderliche Bandbreite einer Regelungsanordnung zur Konstanthaltung der Ausgangsgleichspannung geringer und der Rippel der Ausgangsgleichspannung wird effektiv reduziert. Der erfindungsgemäße AC-DC-Wandler ist für breite Ausgangsleistungsbereiche vorgesehen. Der schaltungstechnische Aufwand zur Realisierung der magnetischen (induktiven) und der kapazitiven Kopplung ist gering. Der AC-DC-Wandler nimmt im Lastfall einen nahezu sinusförmigen und mit der eingangsseitig anliegenden Wechselspannung, die im Regelfall eine Netzspannung ist, nahezu in Phase liegenden Eingangsstrom auf so daß der Blindwiderstand des AC-DC-Wandlers sehr gering ist und der AC-DC-Wandler damit in guter Näherung als Last wie ein reiner Wirkwiderstand wirkt.

Wenn Aufwärtswandlermittel vorgesehen werden, die bewirken, daß eine an der ersten Glättungskondensatoranordnung anliegende Spannung gegenüber einer korrespondierenden und von der ersten Gleichrichteranordnung gelieferten gleichgerichteten Wechselspannung hochgestellt ist, ist ein kontinuierliches Laden der Glättungskondensatoranordnung nicht mehr erforderlich, um diese aufdem erforderlichen Spannungswert zu halten.

Es gibt verschiedene Möglichkeiten, die Aufwärtswandlermittel zu realisieren. Eine Möglickeit ist es, eine Aufwärtswandlerspule vorzusehen, die in Reihe zum zwischen der ersten Gleichrichteranordnung und der ersten Glättungskondensatoranordnung angeordneten induktiven Element angeordnet ist. Die Realisierung mittels der ein separates Bauelement darstellenden Aufwärtswandlerspule hat den Vorteil, daß die Umsetzung der Aufwärtswandlermittel bei vorgegebener Dimensionierung unabhängig von anderen Bauelementen der Schaltung möglich ist. Eine andere Möglichkeit ist es, die Aufwärtswandlerinduktiviät der Aufwärtswandlermittel durch eine Streuinduktivität des zwischen der ersten Gleichrichteranordnung und der ersten Glättungskondensatoranordnung angeordneten induktiven Elements zu realisieren. Bei dieser Ausgestaltung ist keine separate Aufwärtswandlerspule erforderlich. Vielmehr wird das genannte induktive Element so dimensioniert, daß es eine geeignete Streuinduktivität aufweist. Hierzu wird insbesondere ein im Resonanzkonverter vorgesehener Transformator (ein Transformator wird bei Schaltnetzteilen regelmäßig verwendet), der eine Wicklung zur Realisierung des induktiven Elements aufweist, entsprechend ausgestaltet und dimensioniert.

In einer weiteren Ausgestaltung der Erfindung enthält der Resonanzkonverter Schaltelemente, die

- in einem ersten Schaltzustand die an der ersten Glättungskondensatoranordnung anliegende Spannung über die Resonanzkreiselemente der Primärseite eines Transformators zuführen, dessen Sekundärseite über eine zweite Gleichrichteranordnung und eine zweite Glättungskondensatoranordnung mit dem Ausgang des AC-DC-Wandlers gekoppelt ist,
- und die in einem zweiten Schaltzustand die erste Glättungskondensatoranordnung von der Primärseite des Transformators entkoppeln, ohne daß die Resonanzkreiselemente von der Primärseite des Transformators entkoppelt werden.

Eine derartige Ausgestaltung mittels einer Halbbrückenschaltung ist eine für Schaltnerzteile geeignete und gegenüber einer Realisierung mittels eines Vollbrückenwandlers preisgünstigere Lösung. Mittels des Transformators wird eine galvanische Trennung von Eingangs-und Ausgangskreis des AC-DC-Wandlers erreicht. Der Einsatz eines Transformators bewirkt darüber hinaus, daß der Bereich erzeugbarer Ausgangsgleichspannungen und -leistungen vergrößert ist.

Wird das induktive Element in Reihe zur die kapazitive Kopplung bewirkenden Kondensatoranordnung angeordnet, ist ohne weitere Maßnahmen immer sichergestellt, daß in allen Betriebszuständen die kapazitive Kopplung nur zusammen mit der induktiven Kopplung durch das induktive Element wirken kann.

Eine bevorzugte Schaltungsrealisierung beinhaltet, daß ein Anschluß des die kapazitive Kopplung bewirkenden Schaltungszweiges mit einem Punkt zwischen der Primärwicklung des Transformators und dem kapazitiven Resonanzkreiselement des Resonanzkonverters gekoppelt ist. Der andere Anschluß dieses Schaltungszweiges ist mit einem Punkt zwischen der Aufwärtswandlerspule und der Aufwärtswandlerdiode der Aufwärtswandlermittel gekoppelt. Aufdiese Weise wird ein Potential des Resonanzkreises des Resonanzkonverters, das mit der Schaltfrequenz der Schaltelemente moduliert ist, ausgekoppelt und den Aufwärtswandlermitteln zugeführt. Bei einer anderen Schaltungsrealisierung ist ein Anschluß des die kapazitive Kopplung bewirkenden Schaltungszweiges mit einem Punkt zwischen der Primärwicklung des Transformators und einem anderen induktiven Resonanzkreiselement des Resonanzkonverters gekoppelt und der andere Anschluß dieses Schaltungszweiges ist mit einem Punkt zwischen der Aufwärtswandlerspule und der Aufwärtswandlerdiode der Aufwärtswandlermittel gekoppelt. Bei dieser Variante kann kein rein kapazitiver Kreis entstehen, der das kapazitive Resonanzkreiselement und die die kapazitive Kopplung bewirkende Kapazität enthält, so daß Stromspitzen, die beim Bestehen eines Schaltungszustandes mit einem rein kapazitivem Kreis auftreten können, vermieden werden.

In bei Schaltnetzteilen üblicher Weise sind Regelungsmittel zur Konstanthaltung der Ausgangsgleichspannung durch Anpassung der Schaltfrequenz der Schaltmittel vorgesehen, so daß einem Rippel der Ausgangsgleichspannung entgegengewirkt wird.

Ausführungsbeispiele der Erfindung werden im folgenden anhand der Zeichnungen näher erläutert.

Es zeigen:

| | |
|---|---|
| Fig. 1 | eine Ausführungsform des erfindungsgemäßen AC-DC-Wandlers, |
| Fig. 2 und 3 | weitere Ausführungsformen des erfindungsgemäßen AC-DC-Wandlers, |
| Fig. 4 und 5 | Spannungsverläufe im AC-DC-Wandler bei Leerlauf am Ausgang des AC-DC-Wandlers und maximaler Ausgangsleistung, |
| Fig. 6 | ein Diagramm zur Ermittlung des Betriebsbereichs der Schaltfrequenz der Schaltmittel des AC-DC-Wandlers, |
| Fig. 7 | Spannungs- und Stromverläufe im AC-DC-Wandler und |
| Fig. 8 | ein Beispiel für einen verwendeten Transformator. |

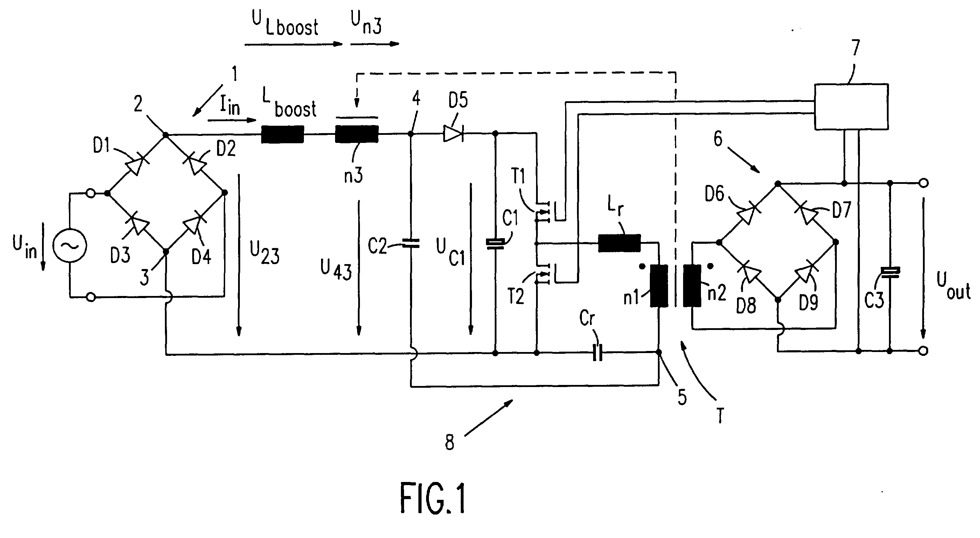

Fig. 1 zeigt eine Ausführungsform des erfindungsgemäßen AC-DC-Wandlers. Dem AC-DC-Wandler wird an seinem Eingang eine Wechselspannung $U_{in}$ zugeführt, die mittels eines aus vier Dioden D1, D2, D3 und D4 bestehenden Brückengleichrichters 1 in eine gleichgerichtete Wechselspannung $U_{23}$ umgesetzt wird. Die Wechselspannung $U_{in}$ ist beispielsweise eine sinusförmige 230V-Netzspannung mit einer Frequenz von 50 Hz. Die Spannung $U_{23}$ wird an Punkten 2 und 3 des Brückengleichrichters 1 abgegriffen. Die posi-

tive Werte annehmende Spannung $U_{23}$ ist dabei vom Punkt 2 zum Punkt 3 gerichtet. Zwischen dem Punkt 2 und einem Punkt 4 liegt die Reihenschaltung aus einer hier als Aufwärtswandlerspule wirkenden Spule $L_{boost}$ und einer Windung n3 eines Transformators T, der weiterhin eine Primärwicklung n1 und eine Sekundärwicklung n2 aufweist. Die Wicklung n3 ist galvanisch von den Wicklungen n1 und n2 entkoppelt, wird aber zumindest teilweise vom die Wicklungen n1 und n2 durchsetzenden magnetischem Fluß durchströmt. Zwischen dem Punkt 4 und dem Punkt 3 liegt die Reihenschaltung aus einer Diode D5 und einer aus einem Glättungskondensator C1 bestehenden Glättungskondensatoranordnung. Der Kondensator C1 ist vorzugsweise als Elektrolytkondensator ausgeführt ist. Die Anode der Diode D5 ist mit dem Punkt 4 und die Kathode der Diode D5 ist mit dem positiven Anschluß des Kondensators C1 verbunden.

Parallel zum Kondensator C1 liegt die Reihenschaltung von zwei als Schalter wirkenden Mosfet-Transistoren T1 und T2 eines Resonanzkonverters 8, die als selbstsperrende Anreicherungs-n-Kanal-Mosfet-Transistoren ausgeführt sind. Der Drain-Anschluß des Transistors T1 ist mit der Kathode der Diode D5 und der Source-Anschluß des Transistors T2 ist mit dem negativen Anschluß von C1 bzw. dem Punkt 3 verbunden. Parallel zur Drain-Source-Strecke des Transistors T2 liegt die Reihenschaltung aus einer Spule $L_r$, der primärseitigen Wicklung n1 des Transformators T und eines Kondensators $C_r$, wobei diese Bauelemente als Elemente eines Resonanzkreises wirken, so daß ein sogenannter LLC-Resonanzkonverter entsteht. Die Spule $L_r$ ist mit dem Source-Anschluß des Transistors T1 und dem Drain-Anschluß des Transistors T2 verbunden. Der Kondensator $C_r$ ist mit dem Source-Anschluß des Transistors T2 verbunden. Die Windung n1 liegt zwischen der Spule $L_r$ und dem Kondensator $C_r$. An einem Punkt 5, der zwischen der Windung n1 und dem Kondensator $C_r$ liegt, und dem Punkt 4 ist ein Kondensator C2 angeordnet.

Die an der sekundärseitigen Wicklung n2 des Transformators T anliegende Spannung wird einem Brückengleichrichter 6, der aus Dioden D6, D7, D8 und D9 besteht, zugeführt. Die vom Brückengleichrichter 6 erzeugte gleichgerichtete Spannung wird an eine aus einem Glättungskondensator C3 bestehenden Glättungskondensatoranordnung geliefert, der parallel zum Ausgang des AC-DC-Wandlers liegt und an dem die Ausgangsspannung $U_{out}$ abgegriffen wird.

Die Ausgangsgleichspannung $U_{out}$ wird einer Regelunseinheit 7 zugeführt, die die Schaltzustände der Transistoren T1 und T2 so regelt, daß die Ausgangsspannung $U_{out}$ konstant gehalten wird. Dazu wird die Schaltfrequenz der Transistoren T1 und T2 durch die Regelungseinheit 7 durch Erzeugung von geeigneten Gate-Spannungen vorgegeben. Die Schaltfrequenz liegt vorzugsweise im Bereich von ungefähr 50 bis 400 kHz. Dabei werden die Transistoren T1 und T2 abwechselnd leitend geschaltet. Die Regelungseinheit 7 enthält einen Optokoppler zur galvanischen Trennung ihrer mit den Gate-Anschlüssen der Transistoren T1 und T2 verbundenen Ausgänge und ihrer die Ausgangsspannung $U_{out}$ abgreifenden Eingänge und einen PI-Regler, der die Frequenz eines ebenfalls in der Regelungseinheit 7 enthaltenen Oszillators beeinflußt, aus der wiederum die Schaltfrequenz der Transistoren T1 und T2 abgeleitet wird.

Die gleichgerichtete Wechselspannung $U_{23}$ wird in eine Spannung $U_{43}$ hochgesetzt. Hierzu werden Aufwärtswandlermittel verwendet, zu der die als Aufwärtswandlerspule wirkende Spule $L_{boost}$, die Windung n3 und die Diode D5 gehören. Der Schalter eines Aufwärtswandlers wird dabei mittels der Windung n3 durch die in dieser Windung induzierte hochfrequente Wechselspannung $U_{n3}$ und durch die kapazitive Kopplung mittels des Kondensators C2 simuliert. Am zwischen dem Brückengleichrichter 1 und dem Glättungskondensator C1 liegenden induktiven Element n3 fällt eine Spannung $U_{n3}$ ab, die dem Anteil des im Transformator T wirksamen magnetischen Flusses entspricht, der die Windung n3 durchsetzt. Der Kondensator C2 koppelt den Punkt 4, der zwischen dem Brückengleichrichter 1 und dem Glättungskondensator C1 liegt, mit dem Punkt 5, der innerhalb des Resonanzkonverters 8 liegt und ein mit der Arbeitsfrequenz des Resonanzkonverters 8 moduliertes Potential trägt. Die Frequenz der Spannung $U_{n3}$ und des am Punkt 5 anliegenden Potentials liegt im Bereich der Schaltfrequenz der Transistoren T1 und T2. Der sinusförmige Verlaufergibt sich daraus, daß $L_r$, n1 und $C_r$ als Resonanzkreiselemente wirken und als solche die mittels der Transistoren T1 und T2 geschalteten Kondensatorspannung $U_{C1}$ in einen sinusförmigen Strom durch die Primärwicklung n1 des Transformators T umsetzen.

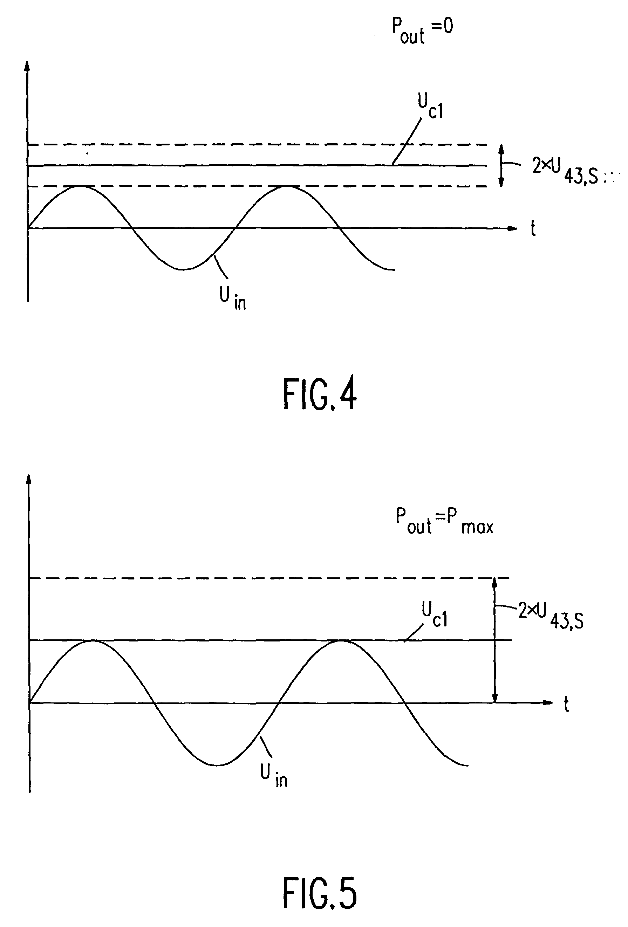

Falls das Potential am Punkt 4 größer als das Potential des zwischen der Diode D5 und dem Kondensator C1 liegenden Punktes ist, wirkt der Kondensator C2 als Ladungspumpe und lädt den Kondensator C1 auf. Dieser Vorgang stellt sicher, daß auch bei großen abgenommenen Ausgangsleistungen $P_{out}$ Kondensator C1 ausreichend aufgeladen ist. Wenn die Spannung $U_{23}$ größer als die Summe aus den Spannungen $U_{Lboost}$, $U_{n3}$ und dem Maximalwert der Spannung $U_{43}$ ist, fließt ein Eingangsstrom $I_{in} > 0$. In diesem Betriebszustand entfalten die induktive Kopplung durch die Wicklung n3 und die kapazitive Kopplung durch den Kondensator C2 ihre vorgesehene Wirkung. Beide wirken neben den Resonanzkreiselementen $L_r$, n1 und $C_r$ als zusätzliche Resonanzkreiselemente. Ihr Einfluß auf die Resonanzfrequenz ist jedoch gegenläufig und kompensiert sich, so daß die resultierende Resonanzfrequenz des Resonanzkonverters nahezu unverändert gegenüber einem Schaltungszustand mit $I_{in} = 0$, bei dem nur die Resonanzkreiselemente $L_r$, n1 und $C_r$ die Resonanzfrequenz des Resonanzkonverters bestimmen, bleibt. Dies vereinfacht die Regelung der Arbeitsfrequenz f des Resonanzkonverters, mit der im vorliegenden Fall die Schaltelemente T1 und T2 betrieben werden, da für eine bestimmte Ausgangsleistung $P_{out}$ sowohl für $I_{in} = 0$ als auch für $I_{in} > 0$ das gleiche Kennlinienfeld zugrundegelegt werden kann. Die erforderliche Bandbreite der Regelungseinheit 7 ist minimiert. Wie Kennlinienfelder bei der Regelung der Arbeitsfrequenz f berücksichtigt werden, ist im Rahmen der Erläuterungen zu Fig. 4 bis 6 näher beschrieben.

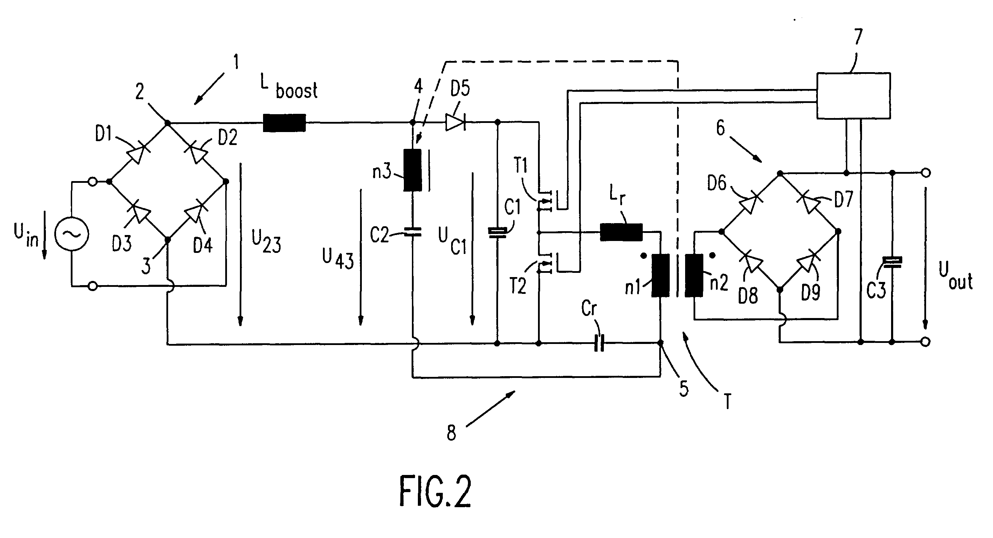

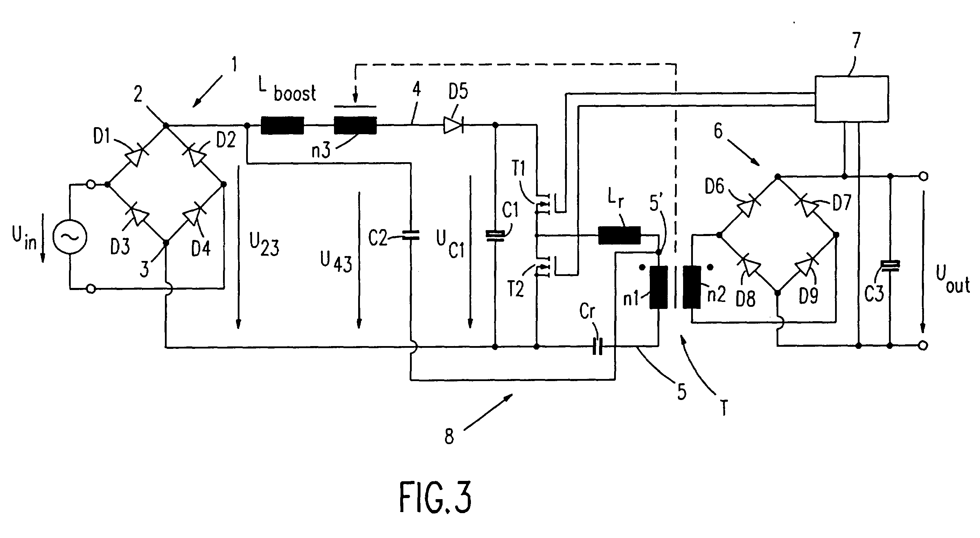

Die Fig. 2 und 3 zeigen Abwandlungen des AC-DC-Wandlers aus Fig. 1. In Fig. 2 ist die Wicklung n3 nicht in Reihe zur Auswärtswandlerspule $L_{boost}$, sondern in Reihe zum Kondensator C2 zwischen diesem und dem Punkt 4 angeordnet. Hierdurch ist sichergestellt, daß die induktive Kopplung durch die Wicklung n3 und die kapazitive Kopplung durch die Kapazität C2 immer gemeinsam wirken. Fig. 3 zeigt eine Ausführungsform bei der zwei weitere mögliche Abwandlungen des AC-DC-Wandlers aus Fig. 1 umgesetzt sind. Eine der beiden Abwandlungen beinhaltet, daß der die kapazitive Kopplung bewirkende Zweig mit dem Kondensator C2 nicht mit dem Punkt 4, sondern mit dem Punkt 2 gekoppelt ist. Weiterhin kann die Schaltung dahingehend modifiziert werden, daß nicht das Potential am Punkt 5, sondern ein Potential 5', das zwischen der Windung n1 und der Induktivität $L_r$ liegt, vom die kapazitive Kopplung bewirkenden Zweig mit dem Kondensator C2 abgegriffen wird. Ein Schaltungszustand, bei dem ein die Kapazitäten $C_r$ und C2 enthaltender rein kapazitiver Schaltkreis besteht, was zu unerwünschten Stromspitzen führen kann, wird somit vermieden.

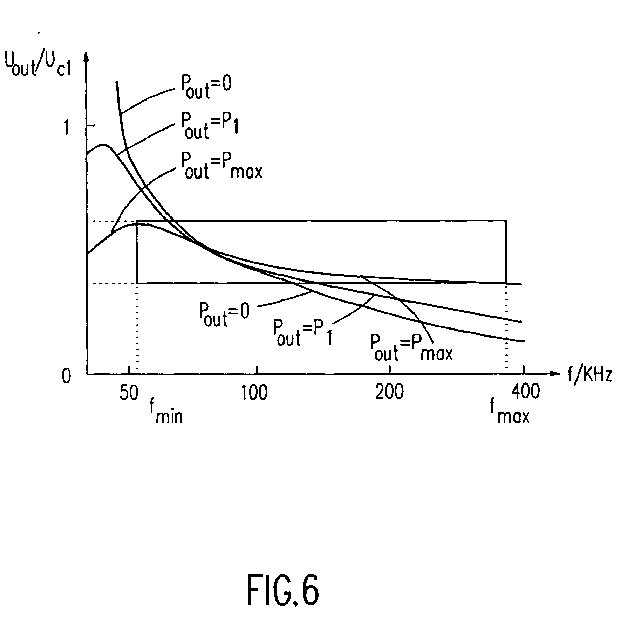

In Fig. 4 und 5 sind die Spannungsverläufe der Eingangsspannung $U_{in}$ und der am Kondensator C1 anliegenden Spannung $U_{C1}$ in ihrem grundsätzlichen Verlauf dargestellt. Sie sind in Zusammenhang mit Fig. 6 zu lesen, die ein Diagramm zeigt, bei dem das Verhältnis der Ausgangsspannung $U_{out}$ zur am Kondensator C1 anliegenden Spannung $U_{C1}$ über der Schaltfrequenz der Transistoren T1 und T2 für verschiedene Ausgangsspannungen $P_{out} = 0$, $P_{out} = P1$ (z.B. 200 Watt) und $P_{out} = P_{max}$ (z.B. 375 Watt) dargestellt ist.

Fig. 4 zeigt, daß bei an seinem Ausgang leerlaufenden AC-DC-Wandler ($I_{out} = 0$, $P_{out} = 0$) die Spannung $U_{C1}$ über dem Maximalwert der Eingangswechselspannung $U_{in}$ liegt. Außerdem ist der Spannungshub der Spannung $U_{43}$ angedeutet, der mit $2 \times U_{43,\ Scheitel}$ bezeichnet ist. In diesem Betriebszustand ist das Verhältnis $U_{out}/U_{C1}$ aufgrund der erhöhten Spannung $U_{C1}$ erniedrigt. Dies entspricht in Fig. 6 einem Arbeitspunkt im rechten abgeflachten Bereich der dargestellten Kurven. Dementsprechend ist die Arbeitsfrequenz f, mit der die Transistoren T1 und T2 geschaltet werden, in diesem Betriebszustand maximal.

Bei dem in Fig. 5 gezeigten Betriebszustand ist dagegen die Ausgangsleistung maximal ($P_{out} = P_{max}$). In diesem Betriebszustand ist die Spannung $U_{C1}$ aufden Wen der Spannungsamplitude der Eingangsspannung $U_{in}$ abgefallen. Die Kondensatorspannung "schwimmt" auf dem Pegel der Amplitude von $U_{in}$. Der Scheitelwert der Spannung $U_{43}$ hat sich erhöht und liegt im Bereich der Amplitude der Eingangsspannung $U_{in}$. Die Verminderung der Spannung $U_{C1}$ bewirkt nun bei Berücksichtigung der Kennlinie für $P_{out} = P_{max}$ gemäß Fig. 6, daß die einzustellende Arbeitsfrequenz f sich im Bereich der Resonanzüberhöhung bei $f = f_{min}$ befindet. Die einzustellende Arbeitsfrequenz f ist gegenüber Betriebszuständen mit geringerer Ausgangsleistung $P_{out}$ reduziert.

Bei kleinen Ausgangsleistungen $P_{out}$ sinkt die Amplitude der am Kondensator C2 anliegenden Spannung. Damit verbunden ist ein Ansteigen der am Glättungskondensator C1 anliegenden Spannung $U_{C1}$, was dazu führt, daß die Differenz zwischen den Spannungen $U_{23}$ und $U_{C1}$ erhöht wird. Dies hat wiederum zur Folge, daß die vom Brückengleichrichter 1 an den Resonanzkonverter 8 übertragene Leistung sinkt. Bei großen Ausgangsleistungen $P_{out}$ dagegen sinkt die Spannung $U_{C1}$ und es treten große Spannungsamplituden im Resonanzkonverter 8 auf. Die erfindungsgemäße Schaltung für einen AC-DC-Wandler wirkt letztlich bezüglich Schwankungen der am Ausgang des AC-DC-Wandlers entnommenen Leistung $P_{out}$ selbststabilisierend.

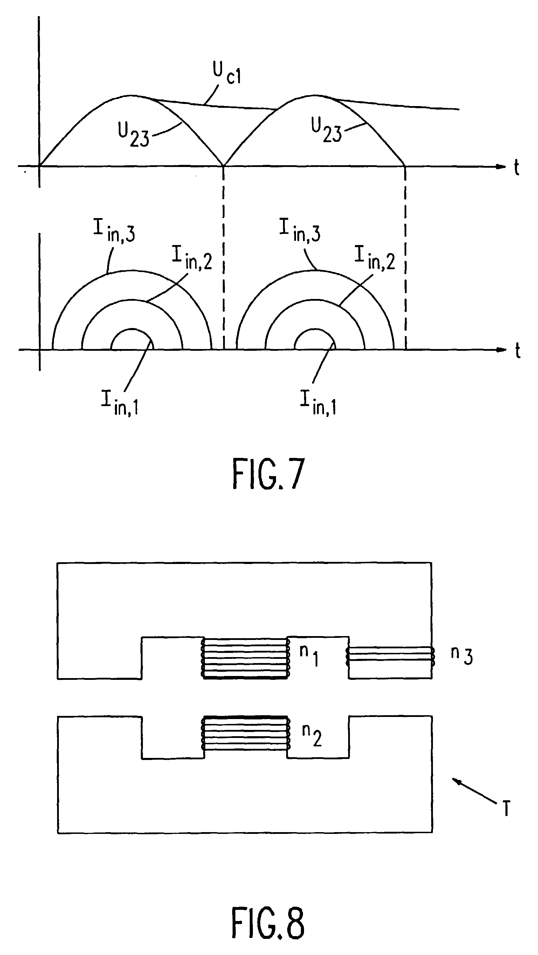

Fig. 7 macht den Zeitverlauf des Eingangsstroms $I_{in}$ für verschiedene Ausgangsleistungen $P_{out}$ deutlich. $I_{in,1}$ soll den Fall einer geringen Ausgangsleistung $P_{out}$, $I_{in,2}$ soll den Fall einer mittleren Ausgangsleistung $P_{out}$ und $I_{in,3}$ soll den Fall maximaler Ausgangsleistung $P_{out}$ darstellen. Über den verschiedenen Zeitverläufen für $I_{in}$ sind zur Verdeutlichung im oberen Diagramm von Fig. 7 die Zeitverläufe der Spannung $U_{23}$ und der Kondensatorspannung $U_{C1}$ dargestellt. Es ergibt sich für kleine Ausgangsleistungen entsprechend dem Verlauf von $I_{in,1}$ ein relativ ein relativ kleiner Bereich, in dem ein Eingangsstrom $I_{in}$ fließt. Mit steigender Ausgangsleistung $P_{out}$ vergrößert sich aus der Zeitbereich, innerhalb dessen ein Eingangsstrom $I_{in}$ fließt.

In Fig. 8 ist schließlich der grundsätzliche Aufbau des Transformators T gezeigt. Man erkennt, daß die Wicklungen n1 und n2 magnetisch in Reihe geschaltet sind. Ein Teil des diese Wicklungen durchsetzenden magnetischen Flusses wird durch die Wicklung n3 geführt. Bei geeigneter Auslegung des Transformators T ist die Aufwärtswandlerinduktivität $L_{boost}$ schon durch eine Streuinduktivität des Transformators T realisiert, so daß auf ein separates Bauelement für die Induktivität $L_{boost}$ verzichtet werden kann.

**Patentansprüche**

1. AC-DC-Wandler mit

- einer ersten Gleichrichteranordnung (1) zur Erzeugung einer gleichgerichteten Wechselspannung ($U_{23}$) aus einer am Eingang des AC-DC-Wandlers anliegenden Wechselspannung

($U_{in}$),

- einer ersten Glättungskondensatoranordnung (C1) zur Glättung der gleichgerichteten Wechselspannung ($U_{23}$),
- einem Resonanzkreiselemente ($L_r$, n1, $C_r$) aufweisenden Resonanzkonverter (8) zur Umsetzung der an der ersten Glättungskondensatoranordnung (C1) anliegenden Spannung ($U_{C1}$) in eine am Ausgang des AC-DC-Wandlers zur Verfügung stehende Ausgangsgleichspannung ($U_{out}$),
- einem zwischen der ersten Gleichrichteranordnung (1) und der ersten Glättungskondensatoranordnung (C1) angeordneten induktivem Element (n3), das magnetisch mit einem induktiven Resonanzkreiselement (n1) gekoppelt ist und
- einer kapazitiven Kopplung eines Punktes (4) zwischen der ersten Gleichrichteranordnung (1) und der ersten Glättungskondensatoranordnung (C1) mit einem Punkt (5) innerhalb des Resonanzkonverters (8) derart, daß während des Betriebs des AC-DC-Wandlers ein mit der Arbeitsfrequenz des Resonanzkonverters (8) moduliertes Potential (V5) rückgekoppelt wird.

2. AC-DC-Wandler nach Anspruch 1,
dadurch gekennzeichnet,

     daß Aufwärtswandlermittel ($L_{boost}$, D5) vorgesehen sind, die bewirken, daß eine an der ersten Glättungskondensatoranordnung (C1) anliegende Spannung ($U_{C1}$) gegenüber einer korrespondierenden und von der ersten Gleichrichteranordnung (1) gelieferten gleichgerichteten Wechselspannung ($U_{23}$) hochgestellt ist.

3. AC-DC-Wandler nach einem der Ansprüche 1 oder 2,
dadurch gekennzeichnet,

     daß die Aufwärtswandlermittel ($L_{boost}$, D5) eine Aufwärtswandlerspule ($L_{boost}$) aufweisen, die in Reihe zum zwischen der ersten Gleichrichteranordnung (1) und der ersten Glättungskondensatoranordnung (C1) angeordneten induktiven Element (n3) angeordnet ist.

4. AC-DC-Wandler nach Anspruch 1 oder 2,
dadurch gekennzeichnet,

     daß die Aufwärtswandlerinduktiviät ($L_{boost}$) der Aufwärtswandlermittel durch eine Streuinduktivität des zwischen der ersten Gleichrichteranordnung (1) und der ersten Glättungskondensatoranordnung (C1) angeordneten induktiven Elements (n3) gebildet wird.

5. AC-DC-Wandler nach einem der Ansprüche 1 bis 4,
dadurch gekennzeichnet,

     daß der Resonanzkonverter (8) Schaltelemente (T1, T2) enthält, die

- in einem ersten Schaltzustand (T1 leitend, T2 sperrend) die an der ersten Glättungskondensatoranordnung (C1) anliegende Spannung ($U_{C1}$) über die Resonanzkreiselemente ($L_r$, n1, $C_r$) der Primärseite (n1) eines Transformators (T) zuführen, dessen Sekundärseite (n2) über eine zweite Gleichrichteranordnung (6) und eine zweite Glättungskondensatoranordnung (C3) mit dem Ausgang ($U_{out}$) des AC-DC-Wandlers gekoppelt ist,
- und die in einem zweiten Schaltzustand (T1 sperrend, T2 leitend) die erste Glättungskondensatoranordnung (C1) von der Primärseite (n1) des Transformators (T) entkoppeln, ohne daß die Resonanzkreiselemente ($L_r$, n1, $C_r$) von der Primärseite (n1) des Transformators (T) entkoppelt werden.

6. AC-DC-Wandler nach einem der Ansprüche 1 bis 5,
dadurch gekennzeichnet,

     daß das induktive Element (n3) in Reihe zur die kapazitive Kopplung bewirkenden Kondensatoranordnung (C2) liegt.

7. AC-DC-Wandler nach einem der Ansprüche 5 oder 6,
dadurch gekennzeichnet,

     daß ein Anschluß des die kapazitive Kopplung bewirkenden Schaltungszweiges (C2) mit einem Punkt (5) zwischen der Primärwicklung (n1) des Transformators (T) und dem kapazitiven Resonanzkreiselement ($C_r$) des Resonanzkonverters (8) gekoppelt ist und daß der andere Anschluß dieses Schaltungszweiges (C2) mit einem Punkt (4) zwischen der Aufwärtswandlerspule ($L_{boost}$) und der Aufwärtswandlerdiode (D5) der Aufwärtswandlermittel gekoppelt ist.

8. AC-DC-Wandler nach einem der Ansprüche 5 oder 6,
dadurch gekennzeichnet,

     daß ein Anschluß des die kapazitive Kopplung bewirkenden Schaltungszweiges (C2) mit einem Punkt (5) zwischen der Primärwicklung (n1) des Transformators (T) und einem anderen induktiven Resonanzkreiselement ($C_r$) des Resonanzkonverters (8) gekoppelt ist und

daß der andere Anschluß dieses Schaltungszweiges (C2) mit einem Punkt (4) zwischen der Aufwärtswandlerspule ($L_{boost}$) und der Aufwärtswandlerdiode (D5) der Aufwärtswandlermittel gekoppelt ist.

9.  AC-DC-Wandler nach einem der Ansprüche 1 bis 8, <u>dadurch gekennzeichnet,</u>

daß Regelungsmittel (7) zur Konstanthaltung der Ausgangsgleichspannung ($U_{out}$) durch Anpassung der Schaltfrequenz der Schaltmittel (T1, T2) vorgesehen sind.

$U_{out}$

C3

D7

D9

7

6

D6

D8

n2

T

$L_r$

n1

5

Cr

T1

C1

T2

$U_{C1}$

8

D5

4

n3

C2

$U_{43}$

$U_{Lboost}$   $U_{n3}$

1

$L_{boost}$

$I_{in}$

$U_{23}$

D2

D4

2

3

D1

D3

$U_{in}$

FIG.1

FIG.2

FIG.3

FIG.4

FIG.5

FIG.6

FIG.7

FIG.8

Europäisches
Patentamt

## EUROPÄISCHER RECHERCHENBERICHT

Nummer der Anmeldung

| EINSCHLÄGIGE DOKUMENTE | | | EP 99201610.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 6) |
| A | EP 0418492 A2 (YOKOGAWA ELECTRIC CORPORATION) 27 März 1991, Seite 7, Zeile 52 – Seite 8, Zeile 29, Fig. 12. -- | 1,5,9 | H 02 M 7/219 H 02 M 3/338 G 05 F 3/06 |
| A | EP 0601858 A1 (CALIFORNIA INSTITUTE OF TECHNOLOGY) 15 Juni 1994, Spalte 5, Zeile 34 – Spalte 7, Zeile 18, Fig. 4. -- | 1,5 | |
| A | EP 0303994 A2 (NIPPON TELEGRAPH AND TELE- PHONE CORPORATION) 22 Februar 1989, Anspruch 1, Fig. 5. ---- | 1,5 | |
| | | | RECHERCHIERTE SACHGEBIETE (Int. Cl 6) |
| | | | H 02 M G 05 F |

Der vorliegende Recherchenbericht wurde für alle Patentansprüche erstellt.

| Recherchenort | Abschlußdatum der Recherche | Prüfer |
|---|---|---|
| WIEN | 09-09-1999 | MEHLMAUER |

ANHANG ZUM EUROPÄISCHEN RECHERCHENBERICHT
ÜBER DIE EUROPÄISCHE PATENTANMELDUNG NR. EP 99201610.5

In diesem Anhang sind die Mitglieder der Patentfamilien der im obengenannten europäischen Recherchenbericht angeführten Patentdokumente angegeben.
Die Angaben über die Familienmitglieder entsprechen dem Stand der EPIDOS-INPADOC-Datei am 16, 9.1999
Diese Angaben dienen zur Unterrichtung und erfolgen ohne Gewähr.

| Im Recherchenbericht angeführtes Patentdokument | | Datum der Veröffentlichung | Mitglied(er) der Patentfamilie | | Datum der Veröffentlichung |
|---|---|---|---|---|---|
| EP A2 | 418492 | 27-03-1991 | JP A2 | 3265464 | 26-11-1991 |
| | | | JP B2 | 2720569 | 04-03-1998 |
| | | | EP A3 | 418492 | 24-04-1991 |
| | | | EP TD | 418492 | 14-08-1991 |
| | | | US A | 5065301 | 12-11-1991 |
| | | | JP A2 | 3265465 | 26-11-1991 |
| | | | JP B4 | 6007746 | 26-01-1994 |
| EP A1 | 601858 | 15-06-1994 | AU B1 | 651287 | 14-07-1994 |
| | | | CA AA | 2110893 | 11-06-1994 |
| | | | IL AO | 107902 | 12-04-1994 |
| | | | IL A1 | 107902 | 04-08-1996 |
| | | | JP A2 | 7023564 | 24-01-1995 |
| | | | JP B2 | 2561431 | 11-12-1996 |
| | | | US A | 5373432 | 13-12-1994 |
| EP A2 | 303994 | 22-02-1989 | DE C0 | 3880760 | 09-06-1993 |
| | | | DE T2 | 3880760 | 05-01-1994 |
| | | | EP A3 | 303994 | 06-12-1989 |
| | | | EP B1 | 303994 | 05-05-1993 |
| | | | US A | 4949078 | 06-11-1990 |
| | | | JP A2 | 1157274 | 20-06-1989 |

Bezüglich näherer Einzelheiten zu diesem Anhang siehe Amtsblatt des Europäischen Patentamtes, Nr. 12/82.